# EUROPEAN PATENT APPLICATION

(11) **EP 0 957 351 A2**
(43) Date of publication of application: **17.11.1999**
(21) Application number: 99401168.2
(22) Date of filing: 12.05.1999
(51) Int. Cl.: G01N 1/22

(54) **Apparatus and process for sampling reactive fluorine-containing gases**

(30) Priority: 13.05.1998 JP 13062198
(71) Applicant: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventor: Cowles, Dan, Dallas, Texas 75252 (US); Uchida, Naoko, Tsukuba-shi, Ibaraki-Pref. (JP)
(74) Representative: Vesin, Jacques

(57) **Abstract**

Provided is an apparatus and process for sampling reactive fluorine-containing gases in which there is little sample contamination and little timewise change in the sample. The sampling apparatus comprises a cylinder for the recovery of samples of reactive fluorine-containing gases. A feed conduit is connected to the inlet of the cylinder by an inlet valve. The feed conduit has a feed inlet that is provided with a feed valve. A discharge conduit is connected to the outlet from the cylinder by an outlet valve. The discharge conduit has a discharge outlet that is provided with a discharge valve. A bypass conduit is connected in parallel to the cylinder, and the upstream and downstream ends of the conduit are provided, respectively, with a bypass inlet valve and a bypass outlet valve. The inlet valve and bypass inlet valve comprise a block valve that minimizes dead space. The interior surfaces of the cylinder and feed conduit comprise metal surfaces inert to fluorine.

## Description

### BACKGROUND OF THE INVENTION

### Field of the Invention

This invention relates to an effective sampling apparatus that can recover samples of reactive fluorine-containing gases and to a sampling process that uses said apparatus. The reactive fluorine-containing gas samples recovered by the apparatus and process of the present invention can be used, for example, for offsite component analysis.

### Description of the Related Art

Various reactive gases are used during the fabrication of electronic devices. Confirmation must be obtained prior to the use of these gases that their purity or composition meets the specifications established for their use. This confirmation step is required not only of the reactive gases residing within gas cylinders, but in some cases also at the site where the reactive gas is actually used. In addition, various reactive gases are also discharged from the equipment used in the processes for electronic device fabrication, and accurate analysis of these reactive gases is also required in some cases.

Confirmation of the purity or composition of a reactive gas at the use site (so-called onsite analysis of the gas components) is associated with various problems when the analytical instrumentation is not installed at the use site. In addition, the use site itself is frequently within a room, such as a clean room, that is very clean, sealed and offers limited working space. As a consequence, onsite analysis is associated with transport of the analytical instrumentation to the use site, the presence of suitable facilities that have been adapted to clean rooms, and as a result is not always possible due to space or cost restrictions. These considerations have led to the use of so-called offsite analysis in which a sample of the process gas is recovered at the site using a sampling apparatus, and component analysis is run in a dedicated analytic laboratory.

The sampling apparatus heretofore used in such procedures has been constructed essentially according to the same concepts as found in environmental monitoring devices, i.e., the gas analyte is suctioned into a cylinder using a vacuum, the inlet valve on the cylinder is then closed, and the gas recovered within the cylinder is used as the sample.

When a high analytical accuracy is not required and the sampling target is a gas that is safe and whose molecule is stable, i.e., an unreactive gas such as air or an inert gas, the construction described above for the prior-art sampling apparatus is advantageous due to its simplicity. However, research by the present inventors has confirmed that this construction suffers from the problems described below when a highly accurate component analysis must be run to determine the impurities in or the composition of a highly reactive gas such as a reactive fluorine-containing gas.

First, the composition of the sample held within the cylinder undergoes "timewise" changes prior to initiation of analysis during transport of the sampling apparatus to the analytical laboratory from the site. This is thought to be due primarily to reaction between the sample and the interior surfaces of the cylinder and to the entry of air into the cylinder. Second, leakage of sample from the cylinder into the ambient environment can create safety problems. This requires fairly careful handling of the sampling apparatus during and after sample recovery, which is a major limitation in workability.

This invention was developed in view of the problems described above for the prior art. An object of the present invention is to provide an effective apparatus and process for sampling reactive fluorine-containing gases that can reduce sample contamination and timewise changes in the sample.

An additional object of the present invention is to provide an apparatus and process for sampling reactive fluorine-containing gases that permit safe handling of the sampling apparatus after sample recovery.

### SUMMARY OF THE INVENTION

A first aspect of the present invention relates to an apparatus for sampling reactive fluorine-containing gases that comprises
a cylinder for recovering a sample of a reactive fluorine-containing gas, wherein the cylinder has an inlet valve-equipped inlet and is essentially composed of a metal with its interior surfaces having been rendered inert by treatment with fluorine,
a feed conduit that is provided with a feed valve-equipped feed inlet and whose downstream side is branched into first and second branches, wherein said feed conduit is essentially composed of a metal with its interior surfaces having been rendered inert by treatment with fluorine, and the said first branch of said feed conduit is connected to the inlet of the cylinder through the inlet valve, and
a bypass conduit that is connected through a bypass inlet valve to the second branch of the feed conduit, wherein said bypass conduit is provided with a discharge valve-equipped discharge outlet.

In a second aspect of the present invention, there is provided an apparatus for sampling reactive fluorine-containing gases that comprises
a cylinder for recovering a sample of a reactive fluorine-containing gas, wherein the cylinder has an inlet valve-equipped inlet and an outlet valve-equipped outlet and is essentially composed of a metal whose interior surfaces have been rendered inert by treatment with fluorine,
a feed conduit that is provided with a feed valve-equipped feed inlet and whose downstream side is branched into first and second branches, wherein said feed conduit is essentially composed of metal whose interior surfaces have been rendered inert by treatment with fluorine, and the first branch of the feed conduit is connected to the inlet of the cylinder through the inlet valve,
a bypass conduit that is connected through a bypass inlet valve to the second branch of the feed conduit, wherein said bypass conduit is provided with a bypass outlet valve, and
a discharge conduit that is connected to the outlet of the bypass outlet valve and to the outlet of the outlet valve of the cylinder, and which combines the flows therefrom, wherein said discharge conduit is provided with a discharge valve-equipped discharge outlet.

In a third aspect of the present invention, there is provided an apparatus as described above for the first or second aspect, characterized in that the inlet valve and bypass inlet valve have a common body and have an integrated valve structure that minimizes dead space.

In a fourth aspect of the present invention there is provided an apparatus as described above for the first, second, or third aspect characterized in that the subject reactive fluorine-containing gas is comprised of a first component selected from the group consisting of F₂, ClF₃, HF, WF₆, SiF₄, and NF₃; a second, optional component selected from the group consisting of He, Ne, Ar, Xe, and N₂; and a third component that is different from said first and second components and is selected from the group consisting of N₂, O₂, CO₂, COF₂, HF, CF₄, SiF₄, and SF₆; wherein the proportions of the first, second, and third components in the said reactive fluorine-containing gas are, respectively, from 100 ppm to less than 100%, from 0% to less than 100%, and from 0.1 ppm to 1,000 ppm.

In a fifth aspect of the present invention there is provided a sampling process that uses an apparatus as described above for the first, second, third, or fourth aspect, wherein said sampling process characteristically comprises
a connection process in which, with the aforesaid feed valve closed, the aforesaid feed inlet is connected to a target port that supplies a reactive fluorine-containing gas and a discharge apparatus is connected to the aforesaid discharge outlet;
a prepurge process in which, after connection of the discharge apparatus to the discharge outlet and with the aforesaid inlet valve closed and the aforesaid feed valve, bypass inlet valve, and discharge valve open, a flow of the aforesaid reactive fluorine-containing gas is established from said target port through the feed conduit and said bypass conduit into the said discharge apparatus;
a sampling process in which the bypass inlet valve is closed with the interior of the feed conduit having been filled with the reactive fluorine-containing gas by the prepurge process, the inlet valve is thereafter opened, a sample of the reactive fluorine-containing gas is thereby recovered within the cylinder, and the inlet valve is closed subsequent to sample recovery; and
a postpurge process in which, with the reactive fluorine-containing gas that remained in the feed conduit and bypass conduit after the sampling process being replaced with an inert gas, the feed valve and said discharge valve are closed.

In a sixth aspect of the present invention there is provided in the above-described fifth aspect prior to the aforesaid connection process, wherein in said initial set-up the aforesaid valves are all closed and an inert gas atmosphere with a pressure less than 10 kg/cm² is established within the said feed conduit.

In a seventh aspect of the present invention there is provided in the initial set-up described above for the fifth or sixth aspect replacement of the interior of the cylinder with a high-purity inert gas and a vacuum being thereafter established therein.

### BRIEF DESCRIPTION OF THE FIGURES OF THE DRAWING

Figure 1 is a schematic drawing that illustrates an apparatus for sampling reactive fluorine-containing gases in accordance with an embodiment of the present invention.

Figure 2 is a schematic drawing that illustrates an apparatus for sampling reactive fluorine-containing gases in accordance with another embodiment of the present invention.

Figure 3 is a table that reports the experimental results from a sampling experiment that employed the apparatus illustrated in Figure 1.

The following reference numbers are used consistently throughout the Figures of the Drawing:

| | |
|---|---|
| 12 | gas cylinder |
| 18 | feed conduit |
| 20 | feed inlet |
| 22 | discharge conduit |
| 24 | discharge outlet |
| 26 | bypass conduit |
| 32 | target port |
| 34 | discharge port |
| 36 | discharge apparatus |
| V1 to V8 | valves |
| PG1, PG2 | pressure gauges |

### DETAILED DESCRIPTION OF THE PREFERRED EMBODIMENTS

In the description that follows, the constituent elements having approximately the same structure and function carry the same reference number, and their explanation will be repeated only when necessary.

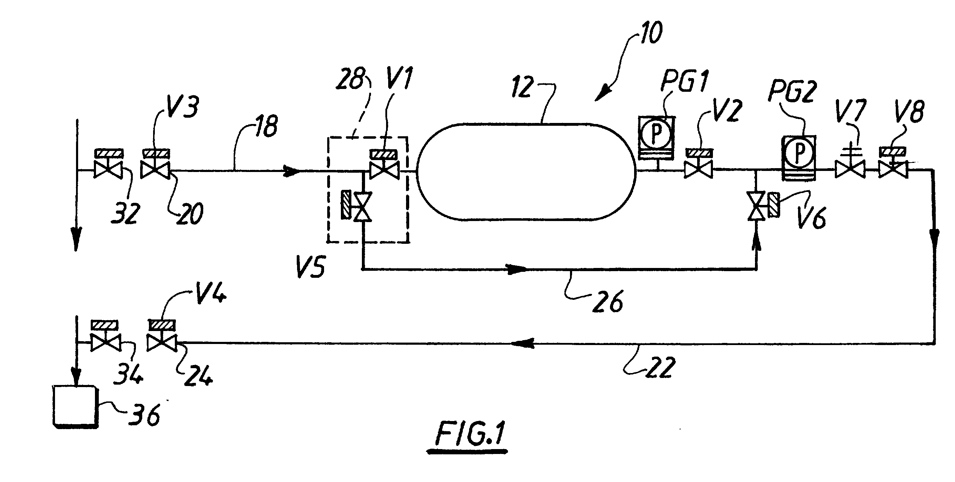

Figure 1 is a schematic drawing that shows an apparatus **10** for sampling reactive fluorine-containing gases that represents one embodiment of the present invention.

As shown in Figure 1, the sampling apparatus **10** is provided with a cylinder **12** for the recovery of samples of reactive fluorine-containing gases. The cylinder **12** comprises, for example, an approximately 10-L gastight container that can recover a sample with a pressure below 10 kg/cm². Directly attached on the cylinder **12** is an inlet valve **V1,** a pressure gauge **PG1,** and an outlet valve **V2.** The pressure gauge **PG1 is** used for confirmation of the gas pressure or degree of vacuum within the cylinder **12.**

The feed conduit **18** is connected to the inlet of the cylinder **12** through the inlet valve **V1.** The feed conduit **18** contains a feed inlet **20** that is provided with a feed valve **V3.** A discharge conduit **22** is connected through an outlet valve **V2** to the outlet of the cylinder **12.** The discharge conduit **22** contains a discharge outlet **24** that is provided with a discharge valve **V4.**

A bypass conduit **26** is connected to the feed conduit **18** and discharge conduit **22** so as to parallel the cylinder **12.** The downstream side of the feed conduit **18** is branched into two branches, with one branch being connected to the inlet valve **V1** and the other branch being connected to a bypass inlet valve **V5.** The inlet valve **V1** and the bypass inlet valve **V5** share a common body and are composed of a block valve having an integrated valve structure **28** that minimizes the dead space generated by the branching. The downstream end of the bypass conduit **26** is connected across a bypass outlet valve **V6** to the discharge conduit **22** between the outlet valve **V2** and discharge valve **V4,** and preferably in the vicinity of the outlet valve **V2.**

A pressure gauge **PG2** is connected to discharge conduit **22** between the downstream end of the bypass conduit **26** and the discharge valve **V4.** A needle valve **V7** and an intermediate valve **V8** are also connected downstream from the pressure gauge **PG2.** The pressure valve **PG2** and the needle valve **V7** are used mainly for pressure monitoring and regulation of the gas flowrate during purge in the various embodiments of the interior of the gas flow path in the subject sampling apparatus **10.**

The material selected for the gas flow path of the subject sampling apparatus **10** should be resistant to fluorine. More specifically, all the regions making up the gas flow path, such as the cylinder **12,** conduits **18, 22,** and **26,** valves **V1** to **V6** and **V8** (preferably semiconductor-grade high-purity diaphragm valves), and pressure gauges **PG1** and **PG2,** should be substantially made of a corrosion-resistant metal such as stainless steel that has been electrolytically polished. The seats in valves **V1** to **V8** can be made from a metal or a fluoropolymer such as PCTEF (polychlorotrifluoroethylene) or Teflon™. The connections in the pipework of the subject apparatus can be formed using butt welds or using metal-gasketed joints.

Prior to use of the subject sampling apparatus **10,** the interior surfaces of at least the cylinder **12** and feed conduit **18** should be rendered inert by treatment with fluorine. This treatment can be run by first subjecting the entire interior of the gas flow path of the apparatus **10,** including the cylinder **12,** to exhaust under reduced pressure. The interior of the gas flow path is then filled with a gas with a composition of roughly 5 % F₂/95% Ne under a pressure ranging from atmospheric pressure to 5 kg/cm²·G (G = gauge pressure) and the apparatus **10** is thereafter heated to 50°C.

This rendering inert of the surfaces of the gas flow path by treatment with fluorine functions to remove microamounts of impurities adhering on these surfaces and to replace the spontaneous oxide film on the metal surfaces with metal fluoride.

The reactive fluorine-containing gas that is the sampling target for the subject sampling apparatus **10** will typically contain the three components described below. The first component is a fluorine compound gas such as F₂, ClF₃, HF, WF₆, SiF₄, and/or NF₃. This first component will be present in an amount ranging from 100 ppm to less than 100 % of the total gas. The second component is an inert gas such as He, Ne, Ar, Xe, or N₂. This second component is not an essential component and will be present on an optional basis. The second component is present at from 0% to less than 100% referred to the total. The third component is an impurity gas and on this basis will presumably differ from the first and second components. This third component is exemplified by N₂, O₂, CO₂, COF₂, HF, CF₄, SiF₄, and SF₆, and will generally be present in an amount ranging from 0.1 ppm to 1,000 ppm of the total gas.

The following description is for the process of sampling reactive fluorine-containing gases with a composition as described above, using the subject sampling apparatus **10.**

Prior to transport of the apparatus 10 to the site where sampling is to be carried out, an initial set-up is first implemented by replacing the interior of the apparatus **10** with an inert gas such as He, etc. In this initial set-up, all the valves **V1** to **V8** (optionally excluding the needle valve **V7)** are closed with the interior of the cylinder **12** residing under a vacuum (reduced pressure) and with the interiors of the feed conduit **18,** discharge conduit **22,** and bypass conduit **26** set under positive pressures. In specific terms, the interior of the cylinder **12** is first completely purged once with a high-purity inert gas, e.g., He, and is then finally placed under a vacuum ≤ -0.98 kg/cm²·G while an inert gas (e.g., He) atmosphere with a pressure of about 3 kg/cm² to 5 kg/cm² is established in the interiors of the conduits **18, 22,** and **26.**

After this initial set-up the apparatus **10** is transported to the sampling site and sampling is carried out as described hereinbelow.

A connection process is carried out first. In this connection process, the feed inlet **20** of the apparatus **10** - which is still residing in its initial set-up condition - is connected to the target port **32** at the site of supply of the reactive fluorine-containing gas. At this point in the process the feed inlet **20** is initially connected relatively loosely to the port **32** and the connection region is purged with inert gas, e.g., He. Then, while continuing to conduct this purge, the port **32** and feed inlet **20** are firmly connected in a gastight manner. The inert gas required for this purging can be obtained from an inert gas source at the site through, for example, the port **32.**

The connection process continues with connection of the discharge outlet **24** of the apparatus **10** - again still residing in its initial set-up condition - to a discharge port **34** that in turn is connected to a discharge apparatus **36** that contains, for example, a discharge pump or detoxification cylinder for treatment of the toxic gas. This discharge apparatus **36** can be, for example, the discharge apparatus used at the site.

A prepurge process is carried out after the connection process. In this prepurge process, the feed valve **V3,** bypass valves **V5** and **V6,** needle valve **V7,** intermediate valve **V8,** and discharge valve **V4** are opened while the inlet valve **V1** and outlet valve **V2** remain closed. In this condition the reactive fluorine-containing gas flows in from the target port **32** to the discharge apparatus **36** through the feed conduit **18,** bypass conduit **26,** and discharge conduit **22.** This operation completely replaces at least the interior of the feed conduit **18** with the reactive fluorine-containing gas.

A sampling process is then implemented after the prepurge process. With the interior of the feed conduit **18** filled with the reactive fluorine-containing gas after the completion of the prepurge process, the bypass inlet valve **V5** is closed and the inlet valve **V1** is opened in the subject sampling process. Utilizing the vacuum established within the cylinder **12,** this process recovers a sample of the reactive fluorine-containing gas within the cylinder **12** by aspiration. The inlet valve **V1** is closed after recovery of the sample.

The sampling process is followed by a postpurge process. In this postpurge process, an inert gas such as He is allowed to flow from the target port **32** to the discharge apparatus **36** through the feed conduit **18,** bypass conduit **26,** and discharge conduit **22.** This process completely replaces the interiors of the feed conduit **18,** discharge conduit **22,** and bypass conduit **26** with inert gas. All the valves **V1** to **V8** (possibly excluding the needle valve **V7**) are closed in this condition. The inert gas required for this purge can again be obtained from an inert gas source at the site through, for example, port **32.**

The feed inlet **20** and discharge outlet **24** are then detached from the target port **32** and discharge port **34,** respectively. The sampling apparatus **10,** now containing the recovered sample, is transported to the analytical laboratory and offsite analysis is carried out.

As has been described hereinabove, reaction of the reactive fluorine-containing gas with the cylinder **12** during and after sample recovery is prevented in this embodiment by the preliminary treatment of the cylinder **12** and feed conduit **18** with fluorine. Moreover, the admixture of air into the interior of the apparatus **10** prior to use is prevented by the creation in the initial set-up of the apparatus **10** of a positive inert gas pressure in feed conduit **18** and discharge conduit **22.** In addition, after sample recovery, the cylinder **12** resides in a state isolated from the ambient environment around the apparatus **10** by an excluded zones of inert gas (within feed conduit **18,** discharge conduit **22,** and bypass conduit **26).**

In sum then, this embodiment can prevent sample contamination and "timewise" changes in the sample that are caused by reaction between the reactive fluorine-containing gas and cylinder **12,** and/or by infiltration of air into the cylinder **12.** The sampling apparatus containing the recovered sample can also be handled very safely as a consequence of the prevention of leakage of the sample from the cylinder **12.**

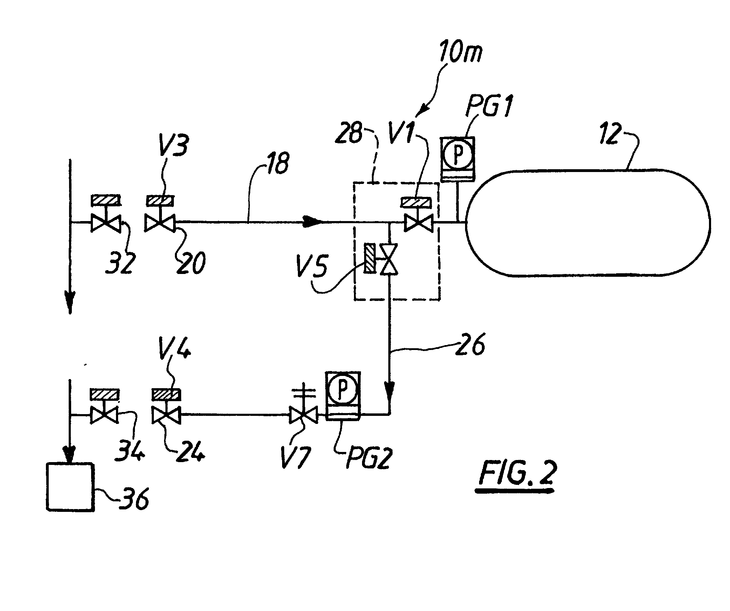

Figure 2 is a schematic drawing of an apparatus **10m** for sampling reactive fluorine-containing gases that is another embodiment of the present invention.

The embodiment shown in Figure 2 is a simplified version of the sampling apparatus **10** illustrated in Figure 1. In this simplified version the discharge conduit **22** and valves **V2, V6,** and **V8** are omitted and the bypass conduit **26** is directly connected to the discharge valve **V4** of the discharge outlet **24.** However, the basic sequence of the sampling process using this sampling apparatus **10m** remains substantially the same as that using the sampling apparatus **10** shown in Figure 1, i.e., sampling can again be run according to the hereinabove described initial set-up, connection process, prepurge process, sampling process, and postpurge process. This simplified apparatus **10m** again can prevent, in consonance with the object of the present invention, sample contamination and "timewise" changes in the sample.

The conduit that supplies inert gas, e.g., He, can be preliminarily connected to any region of the gas flow path in the sampling apparatuses **10** and **10m.** This variation is conveniently used when the inert gas required in the connection and postpurge processes cannot be directly obtained from the target port **32.** In such cases a purifier for the inert gas may also be provided in the sampling apparatus **10** and **10m.**

The sampling apparatuses **10** and **10m** may also be optionally provided with the above-described discharge apparatus **36** containing a discharge pump or detoxification cylinder and/or with a leak detector. The sampling apparatuses **10** and **10m** may be stored in a suitable housing so as to be optimized for transport or use within a clean room.

### Examples

The sampling apparatus 10 illustrated in Figure 1 was used in experiments involving the sampling of reactive fluorine-containing gases. In these experimental runs, a starting gas of 1% F₂/1.25% Kr/97.5% Ne was submitted to component analysis both directly and after sampling by the apparatus 10 and after standing for 6 days, and the resulting analytical data were compared. The component analysis was run using a mass analyzer for N₂ and O₂, a UV/Vis spectrophotometer for F₂, and a Fourier transform-infrared spectrometer for the other components.

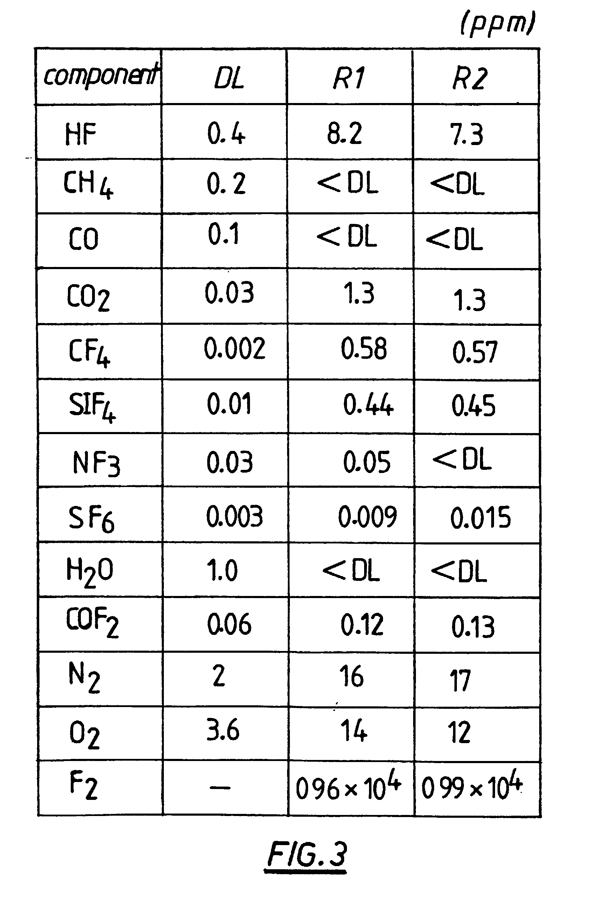

Figure 3 contains a table that reports the results from these experimental runs. In Figure 3, DL denotes the detection limit, R1 refers to the analytical data for the starting gas used in the experiments, and R2 refers to the analytical data for the sample held for 6 days. The component concentration values are expressed in ppm in all cases.

As shown in Figure 3, almost no difference was found between the R1 and R2 data sets. In particular, no change was seen in impurity components such as HF that could have declined due to adsorption or could have increased due to production, or in impurity components such as O₂ that could have increased due to production. Expressed in other terms, the sampling process using the apparatus 10 illustrated in Figure 1 was confirmed to prevent sample contamination and "timewise" changes in the sample.

As has been explained hereinabove, the apparatus and process according to the present invention for sampling reactive fluorine-containing gases can prevent sample contamination and "timewise" sample changes that occur due to (i) infiltration of air into the cylinder and (ii) reactions between reactive fluorine-containing gases and, for example, the cylinder. In addition, by preventing sample leakage from the cylinder, the sampling apparatus and process according to the present invention facilitate and support very safe handling of the sampling apparatus both during and after sample recovery.

## Claims

1. An apparatus for sampling reactive fluorine-containing gases, which comprises
a cylinder that recovers a sample of a reactive fluorine-containing gas, wherein the cylinder has an inlet valve-equipped inlet and is composed of a metal with its interior surfaces having been rendered inert by treatment with fluorine,
a feed conduit that is provided with a feed valve-equipped feed inlet and whose downstream side is branched into first and second branches, wherein said feed conduit is composed of a metal whose interior surfaces have been rendered inert by treatment with fluorine and the first branch of the feed conduit is connected to the inlet of the cylinder through the inlet valve, and
a bypass conduit that is connected through a bypass inlet valve to the second branch of the feed conduit, wherein said bypass conduit is provided with a discharge valve-equipped discharge outlet.

2. An apparatus for sampling reactive fluorine-containing gases, which comprises
a cylinder that recovers a sample of a reactive fluorine-containing gas, wherein the cylinder has an inlet valve-equipped inlet and an outlet valve-equipped outlet and is composed of a metal whose interior surfaces have been rendered inert by treatment with fluorine,
a feed conduit that is provided with a feed valve-equipped feed inlet and whose downstream side is branched into first and second branches, with said feed conduit being composed of a metal whose interior surfaces have been rendered inert by treatment with fluorine, and the first branch of the feed conduit is connected to the inlet of the cylinder through the inlet valve,
a bypass conduit that is connected through a bypass inlet valve to the second branch of the feed conduit, wherein said bypass conduit is provided with a bypass outlet valve, and
a discharge conduit that is connected to the outlet of the bypass outlet valve and to the outlet of the outlet valve of the cylinder and which combines the flows therefrom, with said discharge conduit being provided with a discharge valve-equipped discharge outlet.

3. The apparatus according to Claim 1 for sampling reactive fluorine-containing gases, wherein the inlet valve and bypass inlet valve have a common body and have an integrated valve structure that minimizes dead space.

4. The apparatus according to Claim 1 for sampling reactive fluorine-containing gases, wherein the reactive fluorine-containing gas is composed of a first component selected from the group consisting of F₂, ClF₃, HF, WF₆, SiF₄, and NF₃; a second, optional component selected from the group consisting of He, Ne, Ar, Xe, and N₂; and a third component that is different from the first and second components and is selected from the group consisting of N₂, O₂, CO₂, COF₂, HF, CF₄, SiF₄, and SF₆; wherein the proportions of the first, second, and third components in the reactive fluorine-containing gas are, respectively, from 100 ppm to less than 100%, from 0% to less than 100%, and from 0.1 ppm to 1,000 ppm.

5. The apparatus according to Claim 2 for sampling reactive fluorine-containing gases, wherein the inlet valve and bypass inlet valve have a common body and have an integrated valve structure that minimizes dead space.

6. The apparatus according to Claim 2 for sampling reactive fluorine-containing gases, wherein the reactive fluorine-containing gas is composed of a first component selected from the group consisting of F₂, ClF₃, HF, WF₆, SiF₄, and NF₃; a second, optional component selected from the group consisting of He, Ne, Ar, Xe, and N₂; and a third component that is different from the first and second components and is selected from the group consisting of N₂, O₂, CO₂, COF₂, HF, CF₄, SiF₄, and SF₆; wherein the proportions of the first, second, and third components in the reactive fluorine-containing gas are, respectively, from 100 ppm to less than 100%, from 0% to less than 100%, and from 0.1 ppm to 1,000 ppm.

7. The apparatus according to Claim 3 for sampling reactive fluorine-containing gases, wherein the reactive fluorine-containing gas is composed of a first component selected from the group consisting of F₂, ClF₃, HF, WF₆, SiF₄, and NF₃; a second, optional component selected from the group consisting of He, Ne, Ar, Xe, and N₂; and a third component that is different from the first and second components and is selected from the group consisting of N₂, O₂, CO₂, COF₂, HF, CF₄, SiF₄, and SF₆; wherein the proportions of the first, second, and third components in the reactive fluorine-containing gas are, respectively, from 100 ppm to less than 100%, from 0% to less than 100%, and from 0.1 ppm to 1,000 ppm.

8. A process for sampling reactive fluorine-containing gases that uses an apparatus according to Claim 1 for sampling reactive fluorine-containing gases, which comprises
a connection process in which, with the feed valve closed, the feed inlet is connected to a target port that supplies a reactive fluorine-containing gas and a discharge apparatus is connected to the aforesaid discharge outlet;
a prepurge process in which, after connection of the discharge apparatus to the discharge outlet and with the inlet valve closed and the feed valve, bypass inlet valve, and discharge valve open, a flow of the reactive fluorine-containing gas is established from said target port through the feed conduit and said bypass conduit into the discharge apparatus;
a sampling process in which the bypass inlet valve is closed with the interior of the feed conduit having been filled with the reactive fluorine-containing gas by the prepurge process, the inlet valve is thereafter opened, a sample of the reactive fluorine-containing gas is thereby recovered within the cylinder, and the inlet valve is closed subsequent to sample recovery; and
a postpurge process in which, with the reactive fluorine-containing gas that remained in the feed conduit and bypass conduit after the sampling process being replaced with an inert gas, the feed valve and said discharge valve are closed.

9. The process according to Claim 8 for sampling reactive fluorine-containing gases, wherein prior to the connection process there is a process that initially sets up said apparatus, wherein in said initial set-up the valves are all closed and an inert gas atmosphere with a pressure less than 10 kg/cm² is established within the feed conduit.

10. The process according to Claim 9 for sampling reactive fluorine-containing gases, wherein in said initial set-up the interior of the cylinder is first replaced with a high-purity inert gas and is thereafter placed under a vacuum.

11. A process for sampling reactive fluorine-containing gases that uses an apparatus according Claim 2 for sampling reactive fluorine-containing gases, which comprises
a connection process in which, with the feed valve closed, the feed inlet is connected to a target port that supplies a reactive fluorine-containing gas and a discharge apparatus is connected to the aforesaid discharge outlet;
a prepurge process in which, after connection of the discharge apparatus to the discharge outlet and with the inlet valve closed and the feed valve, bypass inlet valve, and discharge valve open, a flow of the reactive fluorine-containing gas is established from said target port through the feed conduit and said bypass conduit into the discharge apparatus;
a sampling process in which the bypass inlet valve is closed with the interior of the feed conduit having been filled with the reactive fluorine-containing gas by the prepurge process, the inlet valve is thereafter opened, a sample of the reactive fluorine-containing gas is thereby recovered within the cylinder, and the inlet valve is closed subsequent to sample recovery; and
a postpurge process in which, with the reactive fluorine-containing gas that remained in the feed conduit and bypass conduit after the sampling process being replaced with an inert gas, the feed valve and said discharge valve are closed.

12. A process for sampling reactive fluorine-containing gases that uses an apparatus according to Claim 3 for sampling reactive fluorine-containing gases, which comprises
a connection process in which, with the feed valve closed, the feed inlet is connected to a target port that supplies a reactive fluorine-containing gas and a discharge apparatus is connected to the aforesaid discharge outlet;
a prepurge process in which, after connection of the discharge apparatus to the discharge outlet and with the inlet valve closed and the feed valve, bypass inlet valve, and discharge valve open, a flow of the reactive fluorine-containing gas is established from said target port through the feed conduit and said bypass conduit into the discharge apparatus;
a sampling process in which the bypass inlet valve is closed with the interior of the feed conduit having been filled with the reactive fluorine-containing gas by the prepurge process, the inlet valve is thereafter opened, a sample of the reactive fluorine-containing gas is thereby recovered within the cylinder, and the inlet valve is closed subsequent to sample recovery; and
a postpurge process in which, with the reactive fluorine-containing gas that remained in the feed conduit and bypass conduit after the sampling process being replaced with an inert gas, the feed valve and said discharge valve are closed.

13. A process for sampling reactive fluorine-containing gases that uses an apparatus according to Claim 4 for sampling reactive fluorine-containing gases, which comprises
a connection process in which, with the feed valve closed, the feed inlet is connected to a target port that supplies a reactive fluorine-containing gas and a discharge apparatus is connected to the discharge outlet;
a prepurge process in which, after connection of the discharge apparatus to the discharge outlet and with the inlet valve closed and the feed valve, bypass inlet valve, and discharge valve open, a flow of the reactive fluorine-containing gas is established from said target port through the feed conduit and said bypass conduit into the discharge apparatus;
a sampling process in which the bypass inlet valve is closed with the interior of the feed conduit having been filled with the reactive fluorine-containing gas by the prepurge process, the inlet valve is thereafter opened, a sample of the reactive fluorine-containing gas is thereby recovered within the cylinder, and the inlet valve is closed subsequent to sample recovery; and
a postpurge process in which, with the reactive fluorine-containing gas that remained in the feed conduit and bypass conduit after the sampling process being replaced with an inert gas, the feed valve and said discharge valve are closed.

14. The process according to Claim 9 for sampling reactive fluorine-containing gases, wherein in said initial set-up, the interior of the cylinder is first replaced with a high-purity inert gas and is thereafter placed under a vacuum.
